# EUROPÄISCHE PATENTSCHRIFT

(11) **EP 1 935 598 B1**
(45) Veröffentlichungstag und Bekanntmachung des Hinweises auf die Patenterteilung: **05.03.2014**
(21) Anmeldenummer: 07023508.0
(22) Anmeldetag: 05.12.2007
(51) Int. Cl.: B28B 3/02, B28B 17/00, B30B 11/02

(54) **Verfahren für den Betrieb einer Form zur Herstellung von Formsteinen**
Method for utilising a mould for manufacturing moulded bricks
Procédé d'utilisation d'un moule destiné à la fabrication de briques moulées

(30) Priorität: 21.12.2006 DE 102006061860; 29.03.2007 DE 102007015592
(43) Veröffentlichungstag der Anmeldung: 25.06.2008
(73) Patentinhaber: Rampf Formen GmbH, D-89604 Allmendingen (DE)
(72) Erfinder: Schwabe, Jörg-Henry, Dr.-Ing., 99427 Weimar (DE); Walter, Markus, 99096 Erfurt (DE); Rampf, Achim, 89155 Erbach (DE); Wörz, Andreas, 89134 Blaustein (DE)
(74) Vertreter: Otten, Herbert

(56) Entgegenhaltungen:
- DE-A1- 3 837 686
- DE-A1- 19 956 961
- DE-A1-102005 018 444
- HOHAUS W: "EFFEKTIVES VERDICHTEN - VORAUSSETZUNG ZUR WEITEREN AUTOMATISIERUNG, HOEHEREN PRODUKTIONSLEISTUNG UND QUALITAET BEI DER BETONSTEINFERTIGUNG" BFT INTERNATIONAL, BAUVERLAG, GUTERSLOH, DE, Bd. 58, Nr. 4, 1. April 1992 (1992-04-01), Seiten 67-79, XP000271227 ISSN: 0373-4331

## Beschreibung

Die Erfindung betrifft ein Verfahren für den Betrieb einer Form zur Herstellung von Formsteinen, insbesondere aus Beton, in einer Rüttelmaschine nach Anspruch 1.

Aus der DE 196 11 066 A1 ist ein Verfahren zur Kontrolle und/oder Sicherung der Qualität der Betonverdichtung bei der Herstellung von Betonsteinen in Betonsteinmaschinen bekannt. Bei diesem Verfahren werden durch eine Steuerungseinrichtung Sensorsignale von einem oder mehreren Sensoren aufgenommen und zu "Bewertungs-Informationen" weiterverarbeitet. Bei dieser Weiterverarbeitung werden anderweitige Informationen als "Verglefchs-Informationen" mit verarbeitet. Schließlich werden die "Bewertungs-Informationen" genutzt, um Maschineneinstellungen zu verändern oder Aussagen über die aktuell erreichte Verdichtungsgüte zu machen. Sämtliche Sensoren sind an der Betonsteinmaschine angeordnet und sind zeitlich nicht aufeinander abgestimmt.

Aus der DE 10 2005 018 444 A1 ist eine Vorrichtung zur Überwachung und Steuerung bzw. Regelung einer Maschine mit wenigstens zwei Sensoren zur Erfassung von Messgrößen, insbesondere Bewegungsgrößen, und mit einem elektronischen Regelkreis zur Auswertung der erfassten Messgrößen und entsprechender Regelung bzw. Steuerung von Maschinenkomponenten, durch welche die Messgrößen beeinflussbar sind, bekannt. Um die Vorrichtung für die vorherrschenden harten Umgebungsbedingungen tauglich zu machen, wird ein drahtloser Datenaustausch zwischen den Sensoren und dem elektronischen Regelkreis vorgeschlagen.

Aus der DE 199 56 961 A1 ist ein Verfahren zur Kontrolle der Einwirkung von Schwingungen auf die Formgebung und Verdichtung von Betonwaren, insbesondere von Betonsteinen, in Schockvibrationsfertigern unter Einbeziehung von Messwerten von Bewegungsgrößen, die mit dem Verdichtungsgrad und/oder der Verdichtungszeit korrelieren und an geeigneten Stellen der Vibrationsfertiger erfasst werden bekannt. Bei diesem Verfahren sollen Ist- und Sollwerte von Beschleunigungsspektren verglichen werden.

Der Erfindung liegt die Aufgabe zugrunde, ein Verfahren vorzuschlagen, welches neben der Erhöhung der Steinqualität auch dazu dient, Verschleiß an der Rüttelmaschine und/oder der Form zu mindern und/oder Energie zu sparen und/oder aussagekräftige Qualitätsprotokolle zu erstellen.

Diese Aufgabe wird durch die Merkmale des Anspruchs 1 gelöst. In den Unteransprüchen sind vorteilhafte und zweckmäßige Weiterbildungen angegeben.

Durch diese Verfahrensschritte ist es möglich die Form während ihres Betriebs in der Rüttelmaschine quasi in Zeitlupe zu beobachten, aus dieser Beobachtung Rückschlüsse zu ziehen und anhand der Rückschlüsse stetig optimale Maschineneinstellungen zu wählen. Kern der Erfindung ist somit ein Verfahren, durch welches im täglichen Produktionsbetrieb eine Analyse der Rüttel- und Verdichtungsvorgänge möglich ist, welche bislang nur ansatzweise und mit immensem technischen Aufwand im Versuchslabor möglich war. Hierdurch kann frühzeitig in den Produktionsprozess eingegriffen werden, um ein Absinken der Qualität der erzeugten Steine zu verhindern oder um einer erhöhten Belastung bzw. einem erhöhten Verschleiß von Rüttelmaschine und/oder Form entgegen zu wirken.

Weiterhin sieht die Erfindung eine Erfassung von Veränderungen der physikalischen Ausgangsdaten der Form während des Betriebs in der Rüttelmaschine vor, wobei auf der Grundlage von Veränderungen der Ausgangsdaten Serviceintervalle und/oder eine voraussichtliche Lebensdauer der Form bestimmt werden. Hierdurch lässt sich der Produktionsablauf effektiv planen, da die Produktion der Steine entsprechend der prognostizierten Verfügbarkeit der einzelnen Formen geplant werden kann.

Die Erfindung sieht insbesondere vor, Veränderungen der physikalischen Ausgangsdaten der Form durch Vergleich und/oder Analyse der vorliegenden physikalischen Ausgangsdaten mit den Betriebs-Istdaten der Form und/oder der Rüttelmaschine zu erfassen. Bei der Anwendung mehrerer Methoden kann eine größere Sicherheit bezüglich der einzelnen Aussagen erreicht werden.

Die Erfindung sieht auch vor, die Erfassung und die Bestimmung der physikalischen Ausgangsdaten der Form außerhalb der Rüttelmaschine und bei unbefüllter Form durchzuführen. Bei einer derartigen Vorgehensweise können störende und/oder verfälschende Einflüsse der Rüttelmaschine einfach ausgeschlossen werden.

Eine Ausführungsvariante der Erfindung sieht vor, die Erfassung und die Bestimmung der physikalischen Ausgangsdaten der Form innerhalb der Rüttelmaschine und bei unbefüllter Form vorzunehmen. Dieses Vorgehen ist besonders kostengünstig, da auf eine Vorrichtung zur Belastung der Form verzichtet werden kann. Diese Aufgabe wird von der ohnehin vorhandenen Rüttelmaschine übernommen.

Eine weitere Ausführungsvariante der Erfindung sieht die Erfassung und die Bestimmung der physikalischen Ausgangsdaten der Form innerhalb der Rüttelmaschine und bei befüllter Form vor. Dieses Vorgehen ist noch kosteneffektiver, da die Messungen praktisch während der Produktion vorgenommen werden können.

Es ist vorgesehen, durch wenigstens einen Teil der physikalischen Ausgangsdaten und/oder der Betriebs-Istdaten der Form durch wenigstens einen in der Form angeordneten Sensor zu erfassen, wobei die Daten drahtlos übermittelt werden. Hierdurch kann auf das aufwendige Befestigen eines Sensors verzichtet werden.

Weiterhin ist es vorgesehen, die für den Sensor erforderliche Energie in der Form bzw. im Sensor aus Bewegungsenergie zu erzeugen, welche in die Form eingeleitet wird. Hierdurch kann auf die Verlegung von störungsanfälligen Kabeln verzichtet werden.

Insbesondere ist es vorgesehen, die Bewegungsenergie zur Stromerzeugung zu nutzen, die von der Rüttelmaschine in die Form eingeleitet wird. Hierdurch wird dem Sensor mit Sicherheit immer dann ausreichend Energie zur Verfügung gestellt, wenn dieser Daten erfassen und senden muss.

Weiterhin ist es vorgesehen, durch wenigstens einen Teil der Sensoren wenigstens ein Netzwerk aufzubauen, wobei das Netzwerk insbesondere als Funknetzwerk ausgebildet wird. Hierdurch lassen sich auch eine Vielzahl von Sensoren auf einfache Weise in ein System einbinden. Die Erfindung sieht auch vor, die physikalischen Ausgangsdaten und/oder die Betriebs-Solldaten und/oder die Betriebs-Istdaten in wenigstens einem in der Form angeordneten elektronischen Speicher zu speichern. Hierdurch ist eine eindeutige Zuordnung der Daten zu einer Form möglich, ohne dass Verwechslungen möglich sind.

Weiterhin ist es vorgesehen, die Ausgangsdaten und/oder die Betriebs-Istdaten durch wenigstens zwei Sensoren phasenbezogen zu erfassen. Hierdurch stehen die erfassten Daten in einer definierten Beziehung zu der jeweils vorherrschenden Schwingungsphase.

Insbesondere ist es vorgesehen, nach der phasenbezogenen Erfassung der Ausgangsdaten und/oder der Betriebs-Istdaten eine Modalanalyse der Form durchzuführen und hierdurch deren Qualitätszustand zu ermitteln. Auf diese Weise können ohne aufwendige Sonderuntersuchungen Aussagen über den aktuellen Zustand der Form gemacht werden.

Es ist auch vorgesehen, die Ausgangsdaten der Form und/oder die Betriebs-Istdaten der Form an unterschiedlichen Bauteilen der Form zu erfassen. Hierdurch kann auch der Zusammenhalt der unterschiedlichen Bauteile überprüft werden.

Insbesondere ist es vorgesehen, die Ausgangsdaten der Form und/oder die Betriebs-Istdaten der Form an einem Formunterteil und/oder einem Formoberteil und/oder einem Fromeinsatz des Formunterteils und/oder einem Formrahmen des Formunterteils und/oder wenigstens einem Dämpfungsglied der Form zu erfassen. Hierdurch kann das Zusammenwirken der einzelnen Teile der Form beobachtet und analysiert werden.

Weiterhin ist es vorgesehen, den Aufbau eines Funknetzwerks vor dem Betrieb der Rüttelmaschine und/oder mit Beginn des Betriebs der Rüttelmaschine zu starten. Insbesondere ist es vorgesehen, den Aufbau eines Funknetzwerks an der Rüttelmaschine durch wenigstens einen der Sensoren der sich der Rüttelmaschine nähernden Form zu initiieren. Hierdurch kann ein automatischer Aufbau des Funknetzwerkes sichergestellt werden.

Es ist auch vorgesehen, in das Funknetzwerk einen Leitrechner zu integrieren. Durch den Leitrechner ist es möglich, das Funknetzwerk zu steuern bzw. regeln.

Insbesondere ist es vorgesehen, durch den Leitrechner einen Zeitabgleich mit wenigstens einem der Sensoren zu organisieren. Hierdurch können die erfassten Daten bereits in dem jeweiligen Sensor mit einem Zeitstempel versehen werden. Derartige Daten können zu einem beliebigen Zeitpunkt übertragen werden und erlauben dennoch eine Auswertung in Abhängigkeit von der Zeit.

Weiterhin ist es vorgesehen, die Ausgangsdaten der Form und/oder die Betriebs-Istdaten der Form und/oder die Betriebs-Istdaten der Rüttelmaschine in Echtzeit zu erfassen. Eine Echtzeit-Erfassung der Daten gibt die Möglichkeit die Vorgänge in der Rüttelmaschine bzw. in der Form mit geringster Zeitverzögerung zu Visualisieren.

Schließlich ist es vorgesehen, durch die der Rüttelmaschine zugeordneten Sensoren physikalische Ausgangsdaten der Rüttelmaschine zu erfassen. Hierdurch ist es möglich, das Schwingungsverhalten unterschiedlicher Rüttelmaschinen zu erfassen und bei der rechnerischen Ermittlung der optimalen Einstellungen der Rüttelmaschine zu berücksichtigen.

Im Sinne der Erfindung sind die unten stehenden Begriffe wie folgt zu verstehen:
Eigenschwingungsdaten: Eigenschwingungsdaten sind Daten, durch welche das Schwingungsverhalten und insbesondere die Eigenfrequenzen einer Form beschrieben werden.

Physikalische Ausgangsdaten: Sind Daten wie beispielsweise Eigenschwingungsdaten, welche die physikalischen Eigenschaften der Form beschreiben und sich durch Messung oder Berechnung ermitteln lassen. Durch einen Verschleiß oder eine Beschädigung der Form können sich die physikalischen Ausgangsdaten der Form verändern.

Betriebs-Solldaten (BSD): Es wird zwischen Betriebs-Solldaten (BSDF) der Form und zwischen Betriebs-Solldaten (BSDR) der Rüttelmaschine unterschieden. Die Betriebs-Solldaten werden aus den physikalischen Ausgangsdaten ermittelt bzw. abgeleitet und beschreiben Einstellwerte für die Rüttelmaschine bzw. physikalische Werte wie zum Beispiel Frequenz oder Amplitude, welche die Form und/oder die Rüttelmaschine, bzw. einzelne Maschinenteile der Rüttelmaschine zu bestimmten Zeiten der Formsteinherstellung aufweisen sollen.

Betriebs-Istdaten (BID): Es wird zwischen Betriebs-Istdaten (BIDF) der Form und zwischen Betriebs-Istdaten (BIDR) der Rüttelmaschine unterschieden. Die Betriebs-Istdaten sind diejenigen physikalische Werte wie zum Beispiel Frequenz oder Amplitude, welche die Form und/oder die Rüttelmaschine, bzw. einzelne Maschinenteile der Rüttelmaschine zu bestimmten Zeiten der Formsteinherstellung tatsächlich einnehmen.

Adaptive Anpassung: Unter einer adaptiven Anpassung von Betriebs-Solldaten der Form und/oder der Rüttelmaschine wird eine selbständige bzw. selbstlernende Anpassung dieser Daten verstanden, welche vom Leitrechner auf der Grundlage eines entsprechenden Programms vorgenommen wird.

Weitere Einzelheiten der Erfindung werden in der Zeichnung anhand von schematisch dargestellten Ausführungsbeisielen beschrieben.

Hierbei zeigt:
Figur 1: eine schematische Darstellung einer versuchstechnischen Erfassung von physikalischen Ausgangsdaten;
Figur 2: eine schematische Darstellung der Erfassung von physikalischen Ausgangsdaten oder Betriebs-Istdaten im Betrieb einer Rüttelmaschine;
Figur 3: ein das erfindungsgemäße Verfahren beschreibendes Ablaufdiagramm;
Figur 4: ein weiteres Ablaufdiagramm, welches das erfindungsgemäße Verfahren beschreibt;
Figur 5: eine schematische Darstellung einer Form, welche in eine Rüttelmaschine eingebaut ist und
Figur 6: eine schematische, perspektivische Darstellung des in der Figur 5 gezeigten Formunterteils.

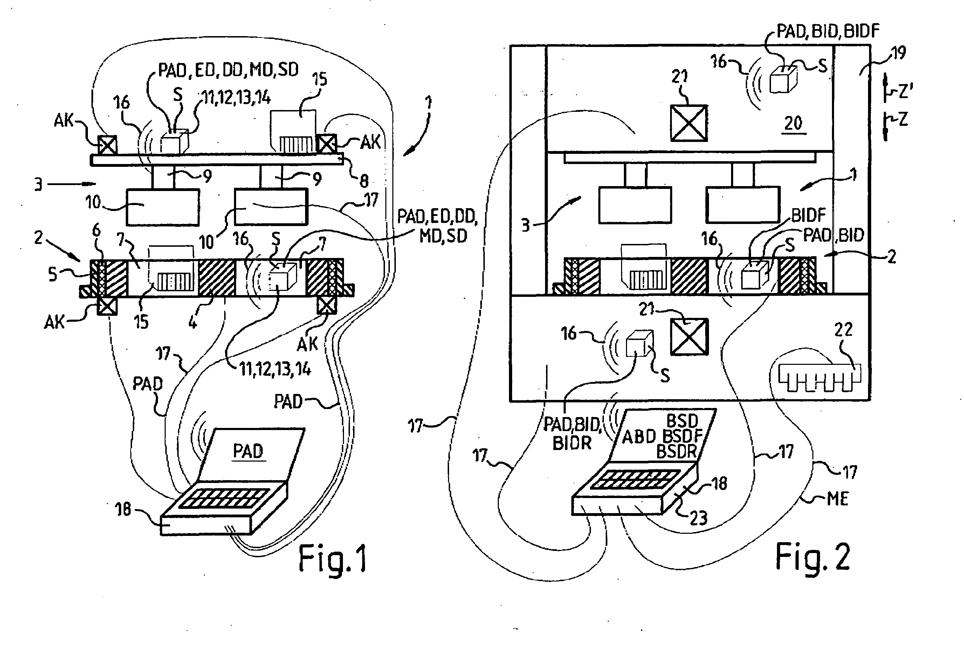

In der Figur 1 ist eine versuchstechnische Erfassung von physikalischen Ausgangsdaten PAD einer Form 1 schematisch dargestellt. Die Form 1 besteht aus einem Formunterteil 2 und einem Formoberteil 3, wobei das Formunterteil 2 der hier dargestellten Form 1 einen Formeinsatz 4 und einen Formrahmen 5 umfasst. Der Formeinsatz 4 ist in dem Formrahmen 5 gehalten und ist gegenüber dem Formrahmen 5 durch Dämpfungsglieder 6 abgefedert. Der Formeinsatz 4 des Formunterteils 2 weist Formnester 7 auf, in welchen nicht darstellte Formsteine herstellbar sind. Das Formoberteil 3 umfasst im wesentlichen eine Anschraubplatte 8, an welcher über Stempelhälse 9 Stempelplatten 10 befestigt sind. Die physikalischen Ausgangsdaten PAD wie zum Beispiel Eigenschwingungsdaten ED, Dämpfungsdaten DD, Massedaten MD oder Steifigkeitsdaten SD werden durch das Einleiten von Schwingungen über Aktoren AK durch Sensoren S erfasst. Die Erfassung der physikalischen Ausgangsdaten PAD der Form 1 erfolgt an dem Formunterteil 2 und/oder an dem Formoberteil 3. Bei einer Erfassung der physikalischen Ausgangsdaten PAD an dem Formunterteil 2 und an dem Formoberteil 3 ist es auch vorgesehen, das Formoberteil mit seinen Stempelplatten 10 in die Formnester 7 des Formunterteils 2 einzufahren und hierdurch bei den Messungen Wechselwirkungen zwischen dem Formoberteil 3 und dem Formunterteil 2 zu berücksichtigen. Die Sensoren S umfassen neben einer Messeinrichtung 11, eine Energieversorgung 12, einen Prozessor 13 und ein Funkmodul 14. Ergänzend ist optional für jeden Sensor S noch ein Datenspeicher 15 vorgesehen. Die Darstellung der Sensoren S und der Datenspeicher 15 in der Figur 1 ist symbolisch zu verstehen. Insbesondere ist es vorgesehen das Formunterteil 2 und das Formoberteil 3 jeweils mit wenigstens zwei Sensoren S auszustatten. Die von den Sensoren S ermittelte physikalische Ausgangsdaten PAD werden über Funkverbindungen 16 und/oder über Datenleitungen 17 an einen Computer 18 zur Erfassung und Auswertung übertragen.

In der Figur 2 ist die Erfassung von physikalischen Ausgangsdaten PAD oder Betriebs-Istdaten BID bzw. BIDF der in der Figur 1 gezeigten Form 1 in einer Rüttelmaschine 19 dargestellt. Das Formunterteil 2 ist nun in die Rüttelmaschine 19 eingespannt und das Formoberteil 3 ist zusammen mit einer Auflast 20 der Rüttelmaschine 19 in Pfeilrichtungen z, z' verfahrbar. Sofern keine Formsteine hergestellt werden, ist mit der gezeigten Anordnung eine Erfassung der physikalischen Ausgangsdaten PAD des Formunterteils 2 und/oder des Formoberteils 3 und/oder der Rüttelmaschine 19 möglich. Hierzu wird die Form 1 bzw. das Formunterteil 2 und/oder das Formoberteil 3 durch Rüttelvorrichtungen 21 der Rüttelmaschine 19 angeregt. Somit sind bei einer Erfassung der physikalischen Ausgangsdaten PAD keine zusätzlichen Aktoren erforderlich. Wie bei der Anordnung entsprechend der Figur 1 werden von den in der Form 2 oder der Rüttelmaschine 19 angeordneten Sensoren S erfassten physikalischen Ausgangsdaten PAD über Funkverbindungen 16 und/oder über Datenleitungen 17 an einen Computer 18 übertragen. Über eine weitere Datenleitung 17 erfasst der Computer 18 auch Maschineneinstellungen ME aus einer Maschinensteuerung 22. Sofern in der Rüttelmaschine 19 mit der Form 1 nicht dargestellte Formsteine hergestellt werden, dienen die Sensoren S zur Erfassung von Betriebs-Istdaten BID bzw. BIDF der Form und Betriebs-Istdaten BID bzw. BIDR der Rüttelmaschine 19. Während der Produktion von Formsteinen übernimmt der Computer 18 dann die Funktion eines Leitrechners 23. Dieser Leitrechner 23 vergleicht Betriebs-Solldaten BSD, welche zunächst aus den physikalischen Ausgangsdaten PAD ermittelt wurden, mit Betriebs-Istdaten BID bzw. BIDF bzw. BIDR, die während der Produktion ermittelt werden und greift ggf. steuernd bzw. regelnd über die Maschinensteuerung 22 in den Produktionsvorgang ein. Sofern keine Abweichungen ΔSD vorliegen oder die ermittelten Abweichungen ΔBD als zulässig definiert sind erfolgt eine erneute Bestimmung von Betriebs-Istdaten BID bzw. BIDF bzw. BIDR, sofern die ermittelten Abweichungen ΔBD nicht mehr zulässig aber noch tolerierbar sind erfolgt eine Nachregelung der Maschineneinstellungen ME der Rüttelmaschine und/oder eine adaptive Anpassung der Betriebs-Solldaten BSD bzw. BSDF für das Formoberteil 3 und/oder das Formunterteil 2 und/oder eine adaptive Anpassung der Betriebs-Solldaten BSD bzw. BSDR für die Rüttelmaschine 19 und anschließend eine erneute Bestimmung von Betriebs-Istdaten BID bzw. BIDF bzw. BIDR.

Sofern die ermittelten Abweichungen ΔBD nicht mehr tolerierbar sind erfolgt eine Abschaltung der Rüttelmaschine 19 um Beschädigungen an der Form 1 und/oder an der Rüttelmaschine 19 zu verhindern.

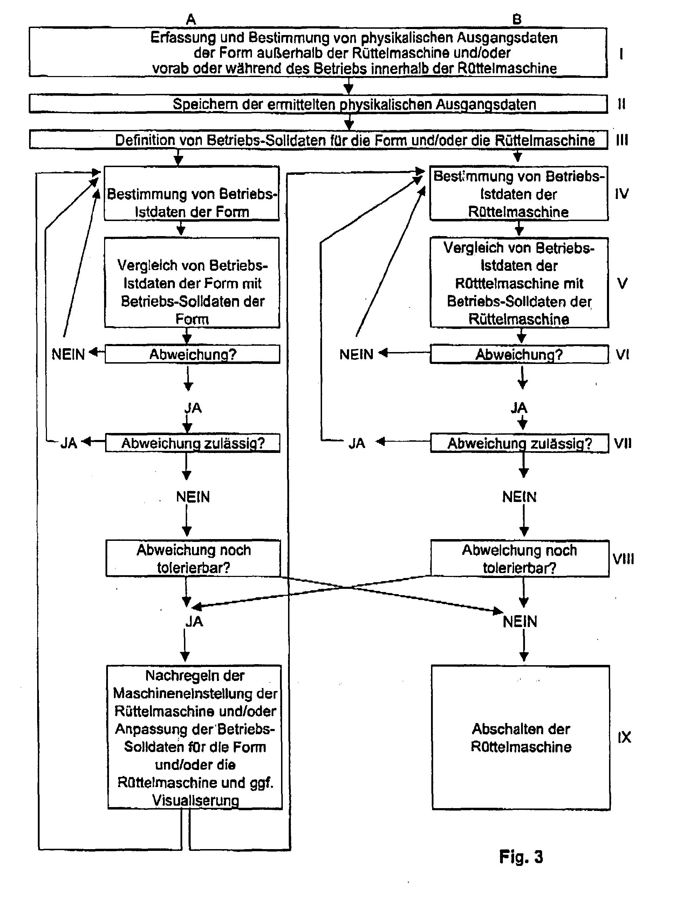

In der Figur 3 ist ein Ablaufdiagramm dargestellt, welches das erfindungsgemäße Verfahren beschreibt. Zunächst erfolgen drei vorbereitende Schritte I bis III, welche das Ziel haben Betriebs-Solldaten BSDF für die Form und/oder Betriebs-Solldaten BSDR für die Rüttelmaschine zu definieren. Diese drei Schritte können in bezug auf die Form auch außerhalb der Rüttelmaschine erfolgen wie dies in der Figur 1 beschrieben ist. Nach dem dritten Schritt III teilt sich das in der Figur 3 gezeigte Ablaufdiagramm in zwei Zweige A und B. Der linke Zweig A beschreibt in den Schritten IV bis VIII den Ablauf im Hinblick auf die Form und der rechte Zweig B beschreibt in den Schritten IV bis VIII den Ablauf im Hinblick auf die Rüttelmaschine. Sofern zwischen den Betriebs-Istdaten BIDF für die Form und den Betriebs-Solldaten BSDF für die Form keine Abweichungen oder als zulässig definierte Abweichungen Δ BD vorliegen erfolgt lediglich eine ständige Neubestimmung der Betriebs-Istdaten BIDF. Dies gilt entsprechend für die Betriebs-Istdaten BIDR der Rüttelmaschine. Bei unzulässigen Abweichungen ΔBD zwischen den Betriebs-Istdaten BIDR der Rüttelmaschine und den Betriebs-Solldaten BSDR der Rüttelmaschine bzw. zwischen den Betriebs-Istdaten BIDF der Form und den Betriebs-Solldaten BSDF der Form erfolgt im Schritt VIII eine Entscheidung, ob die Abweichung ΔBD noch tolerierbar ist. Sofern eine Tolerierbarkeit festgestellt wird, erfolgt im Schritt IX eine Nachregelung der Rüttelmaschine und/oder eine Anpassung der Betriebs-Solldaten BSDF für die Form und/oder der Betriebs-Solldaten BSDR für die Rüttelmaschine und ggf. eine Visualisierung der Abweichung ΔBD auf einem Monitor. Sofern die Abweichung ΔBD zwischen den Betriebs-Istdaten BISF, BIDR und den Betriebs-Solldaten BSDF, BSDR der Form und/oder der Rüttelmaschine eine Toleranzgrenze überschreitet wird die Rüttelmaschine im Schritt IX abgeschaltet, um Beschädigungen an der Rüttelmaschine und/oder der Form zu vermeiden.

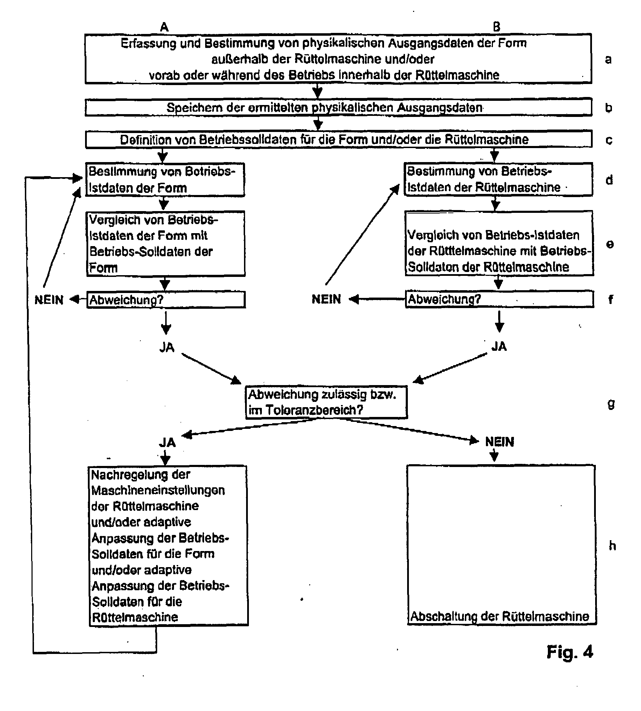

In der Figur 4 ist ein weiteres Ablaufdiagramm mit acht Schritten a bis h dargestellt, welches das erfindungsgemäße Verfahren beschreibt. Dieses Ablaufdiagramm entspricht in seinem grundsätzlichen Aussagegehalt dem in der Figur 3 gezeigten Ablaufdiagramm, wobei die Schritte VI und VII der Figur 3 zu einem Schritt f zusammengefasst sind, welcher durch eine Abfrage nach dem Vorliegen einer relevanten Abweichung ΔBD zwischen den Betriebs-Solldaten BSDF für die Form und den Betriebs-Istdaten BIDF für die Form bzw. zwischen den Betriebs-Solldaten BSDR für die Rüttelmaschine und den Betriebs-Istdaten BIDR für die Rüttelmaschine beschrieben ist. Solange eine Abweichung ΔBD noch zulässig ist, wird diese im Sinne der Erfindung als "nicht relevant" betrachtet.

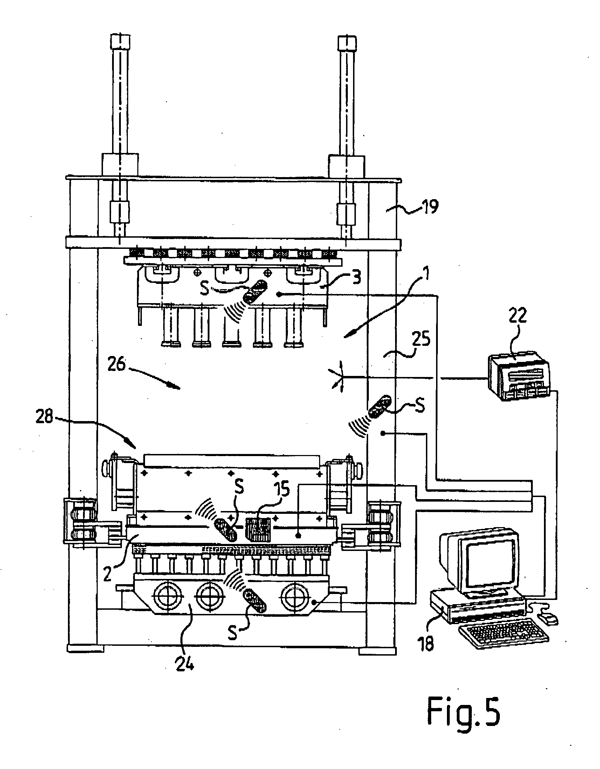

Die Figur 5 zeigt eine schematische Darstellung einer Form 1, welche in eine Rüttelmaschine 19 eingebaut ist. Grundsätzlich ist die Figur 5 mit der Darstellung der Figur 2 vergleichbar. Bei der in der Figur 5 gezeigten Anordnung sind in einem Formoberteil 3, in ein einem Formunterteil 2, in einem Rütteltisch 24 und in einem Maschinengestell 25 Sensoren S angeordnet. Die Sensoren S bilden ein Funknetzwerk 26, in welches auch ein Computer 18 eingebunden ist. Alle von den Sensoren S erfassten Daten ist jeweils einer Systemzeit zugeordnet, so dass auch Daten, welche wegen eines Übertragungsfehlers zu spät bei dem Computer 18 eintreffen, entsprechend ihres Erfassungszeitpunkts ausgewertet werden können. Weiterhin ist es vorgesehen einen Teil der mit einem der Sensoren S erfassten Daten in einem lokalen Speicher 15 zu speichern und zu einem späteren Zeitpunkt, beispielweise bei der Entnahme der Form 1 aus der Rüttelmaschine 19 an den Computer 18 zu übermitteln. Dies ermöglicht eine Nachbereitung der erfassten Daten mit zusätzlichen Informationen und hält gleichzeitig die im Betrieb der Form 1 zu übertragende Datenmenge gering. In der Figur 5 steht über dem Formunterteil 2 gerade ein Füllwagen 28, durch welchen das Formunterteil 2 befüllbar ist. Weiterhin ist der Computer 18 mit einer Maschinensteuerung 22 verbunden, über welche der Computer 18 steuernd bzw. regelnd in den Fertigungsablauf eingreifen kann.

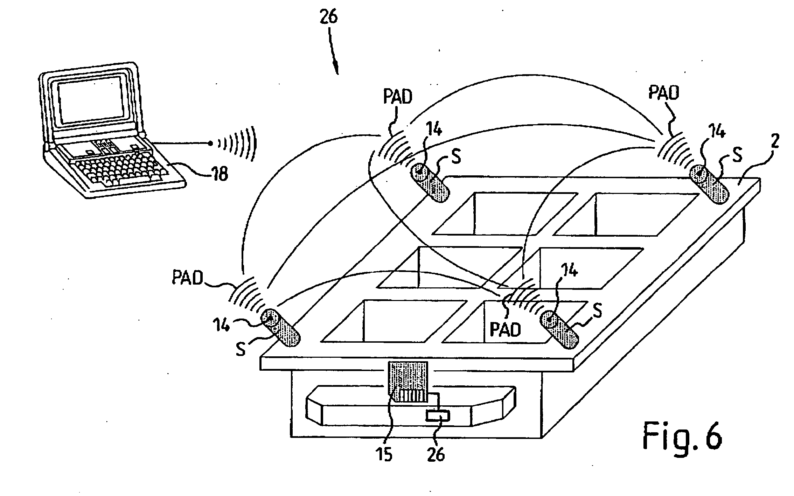

Die Figur 6 zeigt eine schematische, perspektivische Darstellung des in der Figur 5 gezeigten Formunterteils 2. Das Formunterteil 2 weist zur Erfassung von physikalischen Ausgangsdaten PAD außerhalb der Rüttelmaschine vier Sensoren S und einen Speicher 15 auf. Zusammen mit einem Computer 18 bilden die Sensoren S ein Funknetzwerk 26, in welchem die ermittelten Daten übertragen werden. Sofern Funkmodulen 14 der Sensoren S nicht genügend Energie zur Verfügung steht, können die erfassten Daten auch vorübergehend in dem Speicher 15 abgelegt werden. Dieser kann später über eines der Funkmodule 14 oder über eine Schnittstelle 26 ausgelesen werden oder dem Formunterteil 2 entnommen werden.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Form
- 2: Formunterteil
- 3: Formoberteil
- 4: Formeinsatz von 2
- 5: Formrahmen von 2
- 6: Dämpfungsglied von 2
- 7: Formnest
- 8: Anschraubplatte
- 9: Stempelhals
- 10: Stempelplatte
- 11: Messeinrichtung
- 12: Energieversorgung
- 13: Prozessor
- 14: Funkmodul
- 15: Datenspeicher
- 16: Funkverbindung
- 17: Datenleitung
- 18: Computer
- 19: Rüttelmaschine
- 20: Auflast
- 21: Rüttelvorrichtung von 19
- 22: Maschinensteuerung
- 23: Leitrechner
- 24: Rütteltisch
- 25: Maschinengestell
- 26: Funknetzwerk
- 27: Schnittstelle von 15
- 28: Füllwagen

- I bis IV: Schritt des Ablaufdiagramms
- a bis h: Schritte des Ablaufdiagramms
- A, B: Zweige des Ablaufdiagramms
- AK: Aktor
- BID: Betriebs-Istdaten von 1 und/oder 19
- BIDF: Betriebs-Istdaten der Form
- BIDR: Betriebs-Istdaten der Rüttelmaschine
- BSD: Betriebs-Solldaten von 1 und/oder 19
- BSDF: Betriebs-Solldaten der Form
- BSDR: Betriebs-Solldaten der Rüttelmaschine
- ΔBD: Abweichung zwischen BSD und BID bzw. BSDF und BIDF bzw. BSDR und BIDR
- DD: Dämpfungsdaten
- ED: Eigenschwingungsdaten
- MD: Massedaten
- ME: Maschineneinstellung
- PAD: physikalische Ausgangsdaten
- S: Sensor an 1 oder 19
- SD: Steifigkeitsdaten

## Patentansprüche

1. Verfahren für den Betrieb einer Form (1) zur Herstellung von Formsteinen, insbesondere aus Beton, in einer Rüttelmaschine (19) mit folgenden Verfahrensschritten:
- versuchstechnische und/oder rechnerische Erfassung und Bestimmung von physikalischen Ausgangsdaten (PAD) der Form (1) wie Eigenschwingungsdaten (ED) und/oder Biege- und/oder Torsionsschwingungsdaten und/oder Dämpfungsdaten (DD) und/oder Massedaten (MD) und/oder Steifigkeitsdaten (SD) oder dergleichen;
- Speichern und Auswertung dieser vorab außerhalb der Rüttelmaschine (19) und/oder vorab oder während des Betriebs innerhalb der Rüttelmaschine (19) ermittelten Ausgangsdaten (PAD) der Form (1) zur Definition von für die Form (1) und/oder die Rüttelmaschine (19) geeigneten und/oder ungeeigneten Betriebs-Solldaten (BSD, BSDF, BSDR), wobei die Betriebs-Solldaten aus den physikalischen Ausgangsdaten ermittelt bzw. abgeleitet werden und Einstellwerte für die Rüttelmaschine bzw. physikalische Werte wie zum Beispiel Frequenz oder Amplitude beschreiben, welche die Form und/oder die Rüttelmaschine, bzw. einzelne Maschinenteile der Rüttelmaschine zu bestimmten Zeiten der Formsteinherstellung aufweisen sollen;
- stichprobenartige und/oder kontinuierliche Bestimmung von Betriebs-Istdaten (BID, BIDF, BIDR) der Form (1) und/oder der Rüttelmaschine (19) während der Produktion der Formsteine in der Rüttelmaschine (19), wobei die Betriebs-Istdaten diejenigen physikalische Werte wie zum Beispiel Frequenz oder Amplitude sind, welche die Form und/oder die Rüttelmaschine, bzw. einzelne Maschinenteile der Rüttelmaschine zu bestimmten Zeiten der Formsteinherstellung tatsächlich einnehmen;
- Vergleich der während der Produktion der Formsteine bestimmten Betriebs-Istdaten (BID, BIDF, BIDR) der Form (1) und/oder der Rüttelmaschine (19) mit den vorab festgelegten Betriebs-Solldaten (BSD, BSDF, BSDR) für die Form (1) und/oder die Rüttelmaschine (19) ;
- in Abhängigkeit von Größe und Art der bei dem Vergleich ermittelten Abweichung (ΔBD) zwischen den Betriebs-Solldaten (BSD, BSDF, BSDR) und den Betriebs-Istdaten (BID, BIDF, BIDR) :
- entweder erneute Bestimmung von Betriebs-Istdaten (BID, BIDF, BIDR), sofern keine Abweichungen (ΔBD) vorliegen oder die ermittelten Abweichungen (ΔBD) als zulässig definiert sind
- oder Nachregelung von Maschineneinstellungen (ME) der Rüttelmaschine (19) und/oder adaptive Anpassung der Betriebs-Solldaten (BSD, BSDF) für die Form (1) und/oder adaptive Anpassung der Betriebs-Solldaten (BSD, BSDR) für die Rüttelmaschine (19) und erneute Bestimmung von Betriebs-Istdaten (BID, BIDF, BIDR), sofern die ermittelten Abweichungen (ΔBD) noch tolerierbar sind,
- oder Abschaltung der Rüttelmaschine (19), sofern die ermittelten Abweichungen (ΔBD) nicht mehr tolerierbar sind.

2. Verfahren nach einem der vorhergehenden Ansprüche, **dadurch gekennzeichnet, dass** eine Erfassung von Veränderungen der physikalischen Ausgangsdaten (PAD) der Form (1) während des Betriebs in der Rüttelmaschine (19) erfolgt und auf der Grundlage von Veränderungen der Ausgangsdaten (PAD) eine Bestimmung von Serviceintervallen und/oder einer voraussichtlichen Lebensdauer der Form (1) erfolgt.

3. Verfahren nach Anspruch 2, **dadurch gekennzeichnet, dass** die Erfassung von Veränderungen der physikalischen Ausgangsdaten (PAD) der Form (1) durch Vergleich und/oder Analyse der vorliegenden physikalischen Ausgangsdaten (PAD) mit den Betriebs-Istdaten (BID, BIDF, BIDR) der Form (1) und/oder der Rüttelmaschine (19) erfolgt.

4. Verfahren nach einem der vorhergehenden Ansprüche, **dadurch gekennzeichnet, dass** die Erfassung und die Bestimmung der physikalischen Ausgangsdaten (PAD) der Form (1) außerhalb der Rüttelmaschine (19) und bei unbefüllter Form (1) durchgeführt wird.

5. Verfahren nach einem der vorhergehenden Ansprüche 1 bis 3, **dadurch gekennzeichnet, dass** die Erfassung und die Bestimmung der physikalischen Ausgangsdaten (PAD) der Form (1) innerhalb der Rüttelmaschine (19) und bei unbefüllter Form (1) durchgeführt wird.

6. Verfahren nach einem der vorhergehenden Ansprüche 1 bis 3, **dadurch gekennzeichnet, dass** die Erfassung und die Bestimmung der physikalischen Ausgangsdaten (PAD) der Form (1) innerhalb der Rüttelmaschine (19) und bei befüllter Form (1) durchgeführt wird.

7. Verfahren nach einem der vorhergehenden Ansprüche, **dadurch gekennzeichnet, dass** wenigstens ein Teil der physikalischen Ausgangsdaten (PAD) und/oder der Betriebs-Istdaten (BID, BIDF) der Form (1) durch wenigstens einen in der Form (1) angeordneten Sensor (S) erfasst wird, wobei die Daten (PAD, BID, BIDF) drahtlos übermittelt werden.

8. Verfahren nach Anspruch 7, **dadurch gekennzeichnet, dass** für den Sensor (S) erforderliche Energie in der Form (1) aus Bewegungsenergie erzeugt wird, welche in die Form (1) eingeleitet wird.

9. Verfahren nach Anspruch 8, **dadurch gekennzeichnet, dass** die Bewegungsenergie von der Rüttelmaschine (19) oder wenigstens einem Aktor (AK) in die Form (1) eingeleitet wird.

10. Verfahren nach einem der vorhergehenden Ansprüche, **dadurch gekennzeichnet, dass** durch wenigstens einen Teil der Sensoren (S) wenigstens ein Netzwerk (26) aufgebaut wird.

11. Verfahren nach einem der vorhergehenden Ansprüche, **dadurch gekennzeichnet, dass** das Netzwerk (26) als Funknetzwerk (26) ausgebildet wird.

12. Verfahren nach einem der vorhergehenden Ansprüche, **dadurch gekennzeichnet, dass** die physikalischen Ausgangsdaten (PAD) und/oder die Betriebs-Solldaten (BSD, BSDF) und/oder die Betriebs-Istdaten (BID, BIDF) in wenigstens einem in der Form (1) angeordneten elektronischen Datenspeicher (15) gespeichert werden.

13. Verfahren nach einem der vorhergehenden Ansprüche, **dadurch gekennzeichnet, dass** die Ausgangsdaten (PAD) und/oder die Betriebs-Istdaten (BID, BIDF) durch wenigstens zwei Sensoren (S) phasenbezogen erfasst werden.

14. Verfahren nach einem der vorhergehenden Ansprüche, **dadurch gekennzeichnet, dass** nach der phasenbezogenen Erfassung der Ausgangsdaten (PAD) und/oder der Betriebs-Istdaten (BID, BIDF) eine Modalanalyse der Form (1) durchgeführt wird und hierdurch deren Qualitätszustand ermittelt wird.

15. Verfahren nach einem der vorhergehenden Ansprüche, **dadurch gekennzeichnet, dass** die Ausgangsdaten (PAD) der Form (1) und/oder die Betriebs-Istdaten (BID, BIDF) der Form (1) an unterschiedlichen Bauteilen (2, 3, 4, 5, 6) der Form (1) erfasst werden.

16. Verfahren nach Anspruch 15, **dadurch gekennzeichnet, dass** die Ausgangsdaten (PAD) der Form (1) und/oder die Betriebs-Istdaten (BID, BIDF) der Form (1) an einem Formunterteil (2) und/oder einem Formoberteil (3) und/oder einem Formeinsatz (4) des Formunterteils (2) und/oder einem Formrahmen (5) des Formunterteils (2) und/oder wenigstens einem Dämpfungsglied (6) der Form (1) erfasst werden.

17. Verfahren nach Anspruch 11, **dadurch gekennzeichnet, dass** der Aufbau des Funknetzwerks (26) vor dem Betrieb der Rüttelmaschine (19) und/oder mit Beginn des Betriebs der Rüttelmaschine (19) gestartet wird

18. Verfahren nach Anspruch 17, **dadurch gekennzeichnet, dass** der Aufbau des Funknetzwerks (26) an der Rüttelmaschine (19) durch wenigstens einen der Sensoren (S) der sich der Rüttelmaschine (19) nähernden Form (1) initiiert wird.

19. Verfahren nach Anspruch 11 oder 17, **dadurch gekennzeichnet, dass** in das Funknetzwerk (26) ein Leitrechner integriert (23) wird.

20. Verfahren nach Anspruch 19, **dadurch gekennzeichnet, dass** durch den Leitrechner (23) ein Zeitabgleich mit wenigstens einem Sensor (S) organisiert wird.

21. Verfahren nach einem der vorhergehenden Ansprüche, **dadurch gekennzeichnet, dass** die Ausgangsdaten (PAD) der Form (1) und/oder die Betriebs-Istdaten (BID, BIDF) der Form (1) und/oder die Betriebs-Istdaten (BID, BIDR) der Rüttelmaschine (19) in Echtzeit erfasst werden.

22. Verfahren nach einem der vorhergehenden Ansprüche, **dadurch gekennzeichnet, dass** durch die in der Rüttelmaschine (19) angeordneten Sensoren (S) physikalische Ausgangsdaten (PAD) der Rüttelmaschine (19) erfasst werden.

## Claims

1. A method for the operation of a mold (1) for the production of molded blocks, particularly of concrete, in a vibrating machine (19) having the following process steps:
- Experimental and/or computational collection and determination of physical raw data (PAD) of the mold (1) such as natural oscillation data (ED) and/or bending and/or torsional vibration data and/or attenuation data (DD) and/or mass data (MD) and/or rigidity data (SD) or the like;
- Storage and analysis of raw data ascertained in advance outside of the vibrating machine (19) and/or in advance or during the operation inside the vibrating machine (19) of the mold (1) for defining operating target data (BSD, BSDF, BSDR) suitable and/or unsuitable for the mold (1) and/or the vibrating machine (19), in which the operating target data are ascertained or derived from the physical raw data and describe set values for the vibrating machine or physical values such as for example frequency or amplitude, which the mold and/or the vibrating machine or individual machine parts of the vibrating machine should have at specific times of the production of molded blocks;
- Random and/or continuous determination of operating actual data (BID, BIDF, BIDR) of the mold (1) and/or the vibrating machine (19) during the production of the molded blocks In the vibrating machine (19), wherein the operating actual data are those physical values such as for example frequency or amplitude, which the mold and/or the vibrating machine, or individual machine parts of the vibrating machine actually assume at specific times of the production of molded blocks;
- Comparison of operating actual data (BID, BIDF, BIDR) of the mold (1) and/or the vibrating machine (19) determined during the production of the molded blocks with the operating target data (BSD, BSDF, BSDR) specified in advance for the mold (1) and/or the vibrating machine (19);
- Depending on the size and the type of the deviation (ΔBD) determined In the comparison between the operating target data (BSD, BSDF, BSDR) and the operating actual data (BID, BIDF, BIDR):
- either redetermination of the operating actual data (BID, BIDF, BIDR), if no deviations (ΔBD) exist or the deviations (ΔBD) determined are defined as admissible
- or readjustment of machine settings (ME) of the vibrating machine (19) and/or adaptive adjustment of the operating target data (BSD, BSDF) for the mold (1) and/or adaptive adjustment of the operating target data (BSD, BSDF) for the vibrating machine (19) and redetermination of the operating actual data (BID, BIDF, BIDR), if the deviations (ΔBD) determined are still tolerable,
- or disconnection of the vibrating machine (19), if the deviations (ΔBD) determined are no longer tolerable.

2. A method according to one of the preceding claims, **characterized in that** a collection of changes in the physical raw data (PAD) of the mold (1) occurs during the operation in the vibrating machine (19) and on the basis of changes in the raw data (PAD) a determination of the service intervals and/or of an expected lifetime of the mold (1) is made.

3. A method according to claim 2, **characterized in that** the collection of changes in the physical raw data (PAD) of the mold (1) occurs by comparison and/or analysis of the existing physical raw data (PAD) with the operating actual data (BID, BIDF, BIDR) of the mold (1) and/or the vibrating machine (19).

4. A method according to one of the preceding claims, **characterized in that** the collection and determination of the physical raw data (PAD) of the mold (1) is performed outside the vibrating machine (19) and in an unfilled mold (1).

5. A method according to one of the preceding claims 1 to 3, **characterized in that** the collection and the determination of the physical raw data (PAD) of the mold (1) is performed inside the vibrating machine (19) and in the unfilled mold (1).

6. A method according to one of the preceding claims 1 to 3, **characterized in that** the collection and the determination of the physical raw data (PAD) of the mold (1) is performed inside the vibrating machine (19) and in the filled mold (1).

7. A method according to one of the preceding claims, **characterized in that** at least a part of the physical raw data (PAD) and/or the operating actual data (BID, BIDF) of the mold (1) is collected by at least one sensor (S) arranged in the mold (1), wherein the data (PAD, BID, BIDF) are transmitted wirelessly.

8. A method according to claim 7, **characterized in that** energy required for the sensor (S) in the mold (1) is generated from kinetic energy, which is fed into the mold (1).

9. A method according to claim 8, **characterized in that** the kinetic energy from the vibrating machine (19) or at least an actuator (AC) is fed into the mold (1).

10. A method according to one of the preceding claims, **characterized in that** at least one network (26) is built by at least a part of the sensors (S).

11. A method according to one of the preceding claims, **characterized in that** the network (26) is designed as a radio network (26).

12. A method according to one of the preceding claims, **characterized in that** the physical raw data (PAD) and/or the operating target data (BSD, BSDF) and/or the operating actual data (BID, BIDF) are saved in at least one electronic data storage (15) arranged in the mold (1).

13. A method according to one of the preceding claims, **characterized In that** the raw data (PAD) and/or the operating actual data (BID, BIDF) are collected In a phase-related manner by at least two sensors (S).

14. A method according to one of the preceding claims, **characterized in that** after the phase-related collection of the raw data (PAD) and/or the operating actual data (BID, BIDF) a modal analysis of the mold (1) is performed and its quality status is hereby determined.

15. A method according to one of the preceding claims, **characterized in that** the raw data (PAD) of the mold (1) and/or the operating actual data (BID, BIDF) of the mold (1) are collected at different components (2, 3, 4, 5, 6) of the mold (1).

16. A method according to claim 15, **characterized in that** the raw data (PAD) of the mold (1) and/or the operating actual data (BID, BIDF) of the mold (1) are collected at a mold bottom part (2) and/or at a mold top part (3) and/or at a mold insert (4) of the mold top part (2) and/or a mold frame (5) of the mold bottom part (2) and/or at least at an attenuator (6) of the mold (1).

17. A method according to claim 11, **characterized In that** the setting up of the radio network (26) is started before the operation of the vibrating machine (19) and/or at the beginning of the operation of the vibrating machine (19).

18. A method according to claim 17, **characterized in that** the setting up of the radio network (26) in the vibrating machine (19) is initiated by at least one of the sensors (S) of the mold (1) approaching the vibrating machine (19).

19. A method according to claim 11 or 17, **characterized In that** a master computer is integrated (23) Into the radio network (26).

20. A method according to claim 19, **characterized in that** a time leveling is organized by the master computer (23) with at least one sensor (S).

21. A method according to one of the preceding claims, **characterized in that** the raw data (PAD) of the mold (1) and/or the operating actual data (BID, BIDF) of the mold (1) and/or the operating actual data (BID, BIDR) of the vibrating machine (19) are collected In real-time.

22. A method according to one of the preceding claims, **characterized In that** the physical raw data (PAD) of the vibrating machine (19) are collected by the sensors (S) arranged in the vibrating machine (19).

## Revendications

1. Procédé pour l'exploitation d'un moule (1) pour la fabrication de briques, plus particulièrement en béton, dans une machine à vibrer (19) avec les étapes de procédé suivantes :
- mesure et détermination, à l'aide d'essais et/ou d'un calcul, des données physiques de départ (PAD) du moule (1), comme les caractéristiques de vibrations propres (ED) et/ou les données de vibration en flexion et/ou les données de vibration en torsion et/ou les données d'amortissement (DD) et/ou les données de masse (MD) et/ou les données de rigidité (SD) ou autres ;
- enregistrement et analyse de ces données de départ (PAD) du moule (1) déterminées préalablement à l'extérieur de la machine à vibrer (19) et/ou avant ou pendant l'exploitation à l'intérieur de la machine à vibrer (19), pour la définition de données de consignes d'exploitation (BSD, BSDF, BSDR) adaptées et/ou inadaptées pour le moule (1) et/ou la machine à vibrer (19), les données de consigne d'exploitation étant déterminées ou déduites à partir des données physiques de départ et décrivent des valeurs de réglage pour la machine à vibrer ou des valeurs physiques comme la fréquence ou l'amplitude, que doit présenter le moule et/ou la machine à vibrer, ou certaines parties de la machine à vibrer à des moments déterminés de la fabrication de briques ;
- détermination par échantillons et/ou en continu de données effectives d'exploitation (BID, BIDF, BIDR) du moule (1) et/ou de la machine à vibrer (19) pendant la production des briques dans la machine à vibrer (19), les données effectives d'exploitation étant les valeurs physiques, comme la fréquence ou l'amplitude, qu'adopte réellement le moule et/ou la machine à vibrer ou certaines parties de la machine à vibrer à des moments déterminés de la fabrication de briques ;
- comparaison des données effectives d'exploitation (BID, BIDF, BIDR), déterminées pendant la production des briques, du moule (1) et/ou de la machine à vibrer (19) avec les données de consignes d'exploitation (BSD, BSDF, BSDR) préalablement déterminées pour le moule (1) et/ou la machine à vibrer (19) ;
- en fonction de la taille et du type de l'écart (ΔBD) déterminé lors de la comparaison entre les données de consigne d'exploitation (BSD, BSDF, BSDR) et les données effectives d'exploitation (BID, BIDF, BIDR) :
- nouvelle détermination des données réelles d'exploitation (BID, BIDF, BIDR) si aucun écart (ΔBD) n'existe ou si les écarts (ΔBD) déterminés sont considérés comme admissibles
- ou réajustement des réglages (ME) de la machine à vibrer (19) et/ou ajustement adaptatif des données de consigne d'exploitation (BSD, BSDF) pour le moule (1) et/ou ajustement adaptatif des données de consigne d'exploitation (BSD, BSDR) pour la machine à vibrer (19) et nouvelle détermination des données effectives d'exploitation (BID, BIDF, BIDR) si les écarts (ΔBD) déterminés sont encore tolérables,
- ou arrêt de la machine à vibrer (19) si les écarts (ΔBD) déterminés ne sont plus tolérables.

2. Procédé selon l'une des revendications précédentes, **caractérisé en ce qu'**une mesure des modifications des données physiques de départ (PAD) du moule (1) a lieu pendant l'exploitation dans la machine à vibrer (19) et une détermination des intervalles de service et/ou d'une durée de vie prévue du moule (1) est effectuée sur la base des modifications des données de départ (PAD).

3. Procédé selon la revendication 2, **caractérisé en ce que** la mesure des modifications des données physiques de départ (PAD) du moule (1) a lieu par comparaison et/ou analyse des données physiques de départ (PAD) avec les données effectives d'exploitation (BID, BIDF, BIDR) du moule (1) et/ou de la machine à vibrer (19).

4. Procédé selon l'une des revendications précédentes, **caractérisé en ce que** la mesure et la détermination des données physiques de départ (PAD) du moule (1) sont effectuées à l'extérieur de la machine à vibrer (19) et lorsque le moule (1) n'est pas rempli.

5. Procédé selon l'une des revendications précédentes 1 à 3, **caractérisé en ce que** la mesure et la détermination des données physiques de départ (PAD) du moule (1) sont effectuées à l'intérieur de la machine à vibrer (19) et lorsque le moule (1) n'est pas rempli.

6. Procédé selon l'une des revendications précédentes 1 à 3, **caractérisé en ce que** la mesure et la détermination des données physiques de départ (PAD) du moule (1) sont effectuées à l'intérieur de la machine à vibrer (19) et lorsque le moule (1) est rempli.

7. Procédé selon l'une des revendications précédentes, **caractérisé en ce qu'**au moins une partie des données physiques de départ (PAD) et/ou des données effectives d'exploitation (BID, BIDF) du moule (1) est mesurée par au moins un capteur (S) disposé dans le moule (1), les données (PAD, BID, BIDF) étant transmises sans fil.

8. Procédé selon la revendication 7, **caractérisé en ce que** l'énergie nécessaire pour le capteur (S) dans le moule (1) est générée à partir de l'énergie de mouvement introduite dans le moule (1).

9. Procédé selon la revendication 8, **caractérisé en ce que** l'énergie de mouvement est introduite par la machine à vibrer (19) ou par au moins un actionneur (AK) dans le moule (1).

10. Procédé selon l'une des revendications précédentes, **caractérisé en ce qu'**au moins un réseau (26) est établi par au moins une partie des capteurs (S).

11. Procédé selon l'une des revendications précédentes, **caractérisé en ce que** le réseau (26) est conçu comme un réseau radio (26).

12. Procédé selon l'une des revendications précédentes, **caractérisé en ce que** les données physiques de départ (PAD) et/ou les données de consigne d'exploitation (BSD, BSDF) et/ou les données effectives d'exploitation (BID, BIDF) sont enregistrées dans au moins une mémoire de données électronique (15) disposée dans le moule (1).

13. Procédé selon l'une des revendications précédentes, **caractérisé en ce que** les données physiques de départ (PAD) et/ou les données effectives d'exploitation (BID, BIDF) sont mesurées par au moins deux capteurs (S) en tenant compte de la phase.

14. Procédé selon l'une des revendications précédentes, **caractérisé en ce que**, après la mesure relative à la phase des données physiques de départ (PAD) et/ou les données effectives d'exploitation (BID, BIDF), une analyse modale du moule (1) est effectuée et son état qualitatif en est déduite.

15. Procédé selon l'une des revendications précédentes, **caractérisé en ce que** les données physiques de départ (PAD) du moule (1) et/ou les données effectives d'exploitation (BID, BIDF) du moule (1) sont mesurées au niveau de différents composants (2, 3, 4, 5, 6) du moule (1).

16. Procédé selon la revendication 15, **caractérisé en ce que** les données physiques de départ (PAD) du moule (1) et/ou les données effectives d'exploitation (BID, BIDF) du moule (1) sont mesurées au niveau d'une partie inférieure du moule (2) et/ou d'une partie supérieure du moule (3) et/ou d'un insert de moule (4) de la partie inférieure du moule (2) et/ou d'un cadre de moule (5) de la partie inférieure du moule (2) et/ou d'au moins un élément d'amortissement (6) du moule (1).

17. Procédé selon la revendication 11, **caractérisé en ce que** l'établissement du réseau radio (26) est démarré avant l'exploitation de la machine à vibrer (19) et/ou au début de l'exploitation de la machine à vibrer (19).

18. Procédé selon la revendication 17, **caractérisé en ce que** l'établissement du réseau radio (26) au niveau de la machine à vibrer (19) est initié par au moins un des capteurs (S) du moule (1) se rapprochant de la machine à vibrer (19).

19. Procédé selon la revendication 11 ou 17, **caractérisé en ce qu'**un ordinateur hôte (23) est intégré dans le réseau radio (26).

20. Procédé selon la revendication 19, **caractérisé en ce qu'**une compensation temporelle avec au moins un capteur (S) est organisée par l'ordinateur hôte (23).

21. Procédé selon l'une des revendications précédentes, **caractérisé en ce que** les données physiques de départ (PAD) du moule (1) et/ou les données effectives d'exploitation (BID, BIDF) du moule (1) et/ou les données effectives d'exploitation (BID, BIDR) de la machine à vibrer (19) sont mesurées en temps réel.

22. Procédé selon l'une des revendications précédentes, **caractérisé en ce que** les données physiques de départ (PAD) de la machine vibrer (19) sont mesurées par les capteurs (S) disposés dans la machine à vibrer (19).
